Europäisches Patentamt

European Patent Office

Office européen des brevets

(19)

(11) EP 0 893 672 A1

(12) **DEMANDE DE BREVET EUROPEEN**

(43) Date de publication:
27.01.1999 Bulletin 1999/04

(51) Int. Cl.$^6$: **G01D 5/24**, G01B 7/30,
B62D 15/02

(21) Numéro de dépôt: 98401876.2

(22) Date de dépôt: 23.07.1998

(84) Etats contractants désignés:
AT BE CH CY DE DK ES FI FR GB GR IE IT LI LU
MC NL PT SE
Etats d'extension désignés:
AL LT LV MK RO SI

(30) Priorité: 25.07.1997 FR 9709486

(71) Demandeur: SC2N
78180 Montigny-le-Bretonneux (FR)

(72) Inventeur: Gauthier, Christian
92200 Neuilly sur Seine (FR)

(74) Mandataire: Texier, Christian
Cabinet Regimbeau,
26, Avenue Kléber
75116 Paris (FR)

(54) **Capteur d'angle pour véhicule automobile, notamment pour arbre de direction**

(57) La présente invention concerne un capteur d'angle pour véhicule automobile, notamment pour arbre de direction, comprenant un élément de commande (210) lié à rotation avec l'organe dont la rotation doit être détectée et qui possède une gorge spiralée (212), un volet (220) comportant un pion (222) engagé dans la gorge spiralée (212) pour être déplacé lors de la rotation dudit élément de commande (210), et un transducteur électrique (230) sensible au déplacement du volet (220) pour délivrer une information représentative de la position dudit organe.

FIG.1

## Description

La présente invention concerne le domaine des capteurs d'angle pour véhicules automobiles, notamment pour la mesure de l'angle de rotation de l'arbre de direction d'un véhicule automobile.

La présente invention a pour but de proposer un nouveau capteur d'angle permettant de détecter un angle de rotation avec précision sur une plage importante, de préférence plus de 360°, typiquement de l'ordre de 1000°.

Ce but est atteint dans le cadre de la présente invention grâce à un capteur d'angle comprenant un élément de commande lié à rotation avec l'organe dont la rotation doit être détectée et qui possède une gorge spiralée, un volet comportant un pion engagé dans la gorge spiralée pour être déplacé lors de la rotation dudit élément de commande, et un transducteur électrique de type capacitif sensible au déplacement du volet pour délivrer une information représentative de la position dudit organe.

Selon une autre caractéristique avantageuse de la présente invention, il est prévu en outre un second capteur d'angle adapté pour détecter la position de l'organe sur chacun de plusieurs secteurs d'amplitude inférieure à la plage couverte par le premier capteur précité.

De préférence ce second capteur est également de type capacitif.

Selon une autre caractéristique avantageuse de la présente invention, le second capteur comprend un rotor lié à l'organe et comportant au moins une ailette radiale associée à un ensemble d'électrodes fixes pour modifier le couplage entre celles-ci en fonction de la position angulaire du rotor et donc de l'organe.

D'autres caractéristiques, buts et avantages de la présente invention apparaitront à la lecture de la description détaillée qui va suivre et en regard des dessins annexés, donnés à titre d'exemples non limitatifs et sur lesquels:

- les figures 1 et 2 représentent deux vues opposées en perspective éclatée d'un capteur d'angle conforme à la présente invention,
- les figures 3 et 4 représentent le volet du dispositif dans deux positions angulaires différentes,
- la figure 5 représente une vue en perspective éclatée d'un capteur conforme à une variante de réalisation de la présente invention et

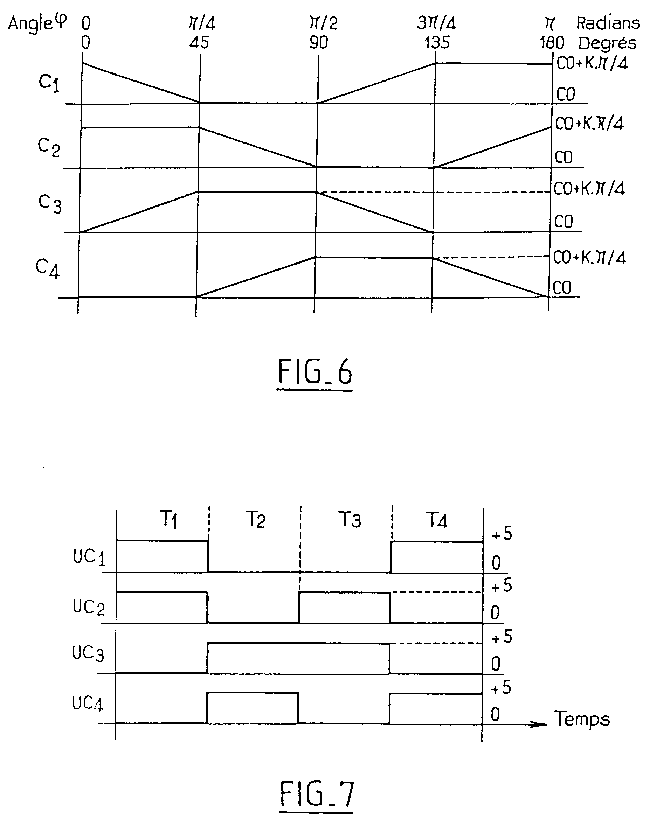

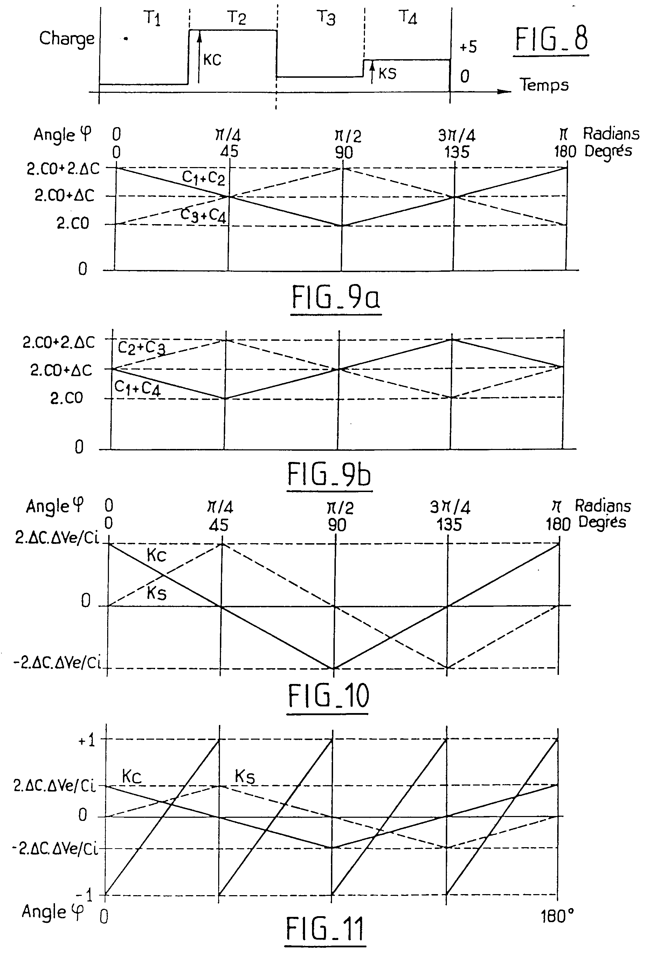

- les figures 6 à 11 représentent différents signaux liés à ce capteur, plus précisément : la figure 6 représente l'évolution de capacités individuelles de ce capteur en fonction de l'angle de rotation d'une armature mobile, la figure 7 représente des signaux électriques d'entrée appliqués aux électrodes de ce capteur, la figure 8 représente le signal de sortie mesuré sur l'une des électrodes de ce capteur, les figures 9a et 9b représentent l'évolution de la somme de deux des capacités individuelles en fonction de l'angle de rotation et les figures 10 et 11 représentent l'évolution de paramètres de calcul en fonction de l'angle de rotation.

Le capteur conforme à la présente invention comprend un dispositif principal 200 ou "premier dispositif" et un dispositif auxiliaire 100 ou "second dispositif".

Le dispositif auxiliaire 100 a pour but de détecter l'angle de rotation d'un organe autour d'un axe O-O, par exemple de l'arbre de direction, avec précision sur un secteur angulaire d'amplitude supérieure à la plage couverte par le dispositif principal 200. Typiquement le dispositif 100 a pour but de détecter l'angle de rotation avec précision sur un secteur de l'ordre de 180°.

Le dispositif principal 200 a pour but de détecter l'angle de rotation de l'organe sur une plage supérieure, par exemple de l'ordre de 1000°.

Ces deux dispositifs 100 et 200 sont logés dans un boitier commun 300. Le boitier 300 est formé de deux coquilles globalement circulaires, complémentaires et coaxiales 310 et 320.

Plus précisément, chaque coquille 310, 320 comporte un anneau 312, 322 centré sur l'axe de rotation O-O de l'organe à détecter et entouré par une jupe cylindrique 314, 324. De plus l'anneau 312, 322 et la jupe 314, 324 définissent une excroissance radiale 316, 326 de contour parallélépipédique, destinée à former un connecteur.

Les anneaux 312 et 322 possèdent un passage circulaire central 311 et 321 autorisant le passage de l'organe à détecter.

Les deux coquilles 310 et 320 sont assemblées entre elles par tous moyens appropriés, par exemple grâce à des pattes de clipsage 318 et des dentures complémentaires 328 prévues respectivement sur les deux coquilles 310, 320.

Les deux dispositifs 100 et 200 sont séparés par une entretoise médiane 330 transversale à l'axe de rotation O-O de l'organe à détecter.

Le dispositif auxiliaire 100 comprend un rotor 110 formé d'une bague 111 comportant deux ailettes externes 112 et 114 diamétralement opposées.

La bague 111 est adaptée pour être liée à rotation avec l'organe à détecter, soit typiquement l'arbre de direction.

Les deux ailettes 112 et 114 en forme de secteur de couronne s'étendent coplanairement et perpendiculairement à l'axe de rotation O-O dudit organe.

Les ailettes 112 et 114 sont placées entre deux ensembles d'électrodes 120 et 130 fixes, portées respectivement par la coquille 310 et par l'entretoise 330.

Ces électrodes 120 et 130 peuvent faire l'objet de diverses variantes de réalisation.

A titre d'exemple non limitatif l'ensemble d'électrodes 120 peut être formé d'une électrode unique annulaire perpendiculaire à l'axe de rotation O-O de l'organe et coaxiale à cet axe, tandis que le second ensemble d'électrodes 130 peut être formé d'une pluralité d'électrodes 131 à 138 - par exemple huit électrodes - équiréparties autour de l'axe de rotation O-O de l'organe.

Le rotor 110 modifie ainsi le couplage capacitif entre les électrodes 120 et 130 en fonction de sa position angulaire, donc de la position angulaire de l'organe.

Les ailettes 112 et 114 du rotor 110 destinées à modifier le couplage capacitif entre les électrodes 120 et 130 sont de préférence réalisées en matériau électriquement non conducteur, avantageusement en matériau de forte permittivité diélectrique.

Cependant en variante les ailettes 112 et 114 peuvent être formées en matériau électriquement conducteur, par exemple en métal.

A titre d'exemple non limitatif les électrodes 130 peuvent recevoir des signaux électriques de commande et servir d'émetteurs, tandis que l'électrode 120 sert de récepteur.

Plus précisément les signaux appliqués à l'ensemble d'électrodes 130 et le traitement des signaux captés sur l'électrode 120, peuvent être du type décrit dans l'un des documents suivants US-A-3 845 377, EP-A-0 459 118, DE-A-3 711 062, GB-A-2 176 013, DE-A-3 328 421, US-A-4 238 781, FR-A-2 457 003, US-A-3 732 553, EP-A-0 551 066 ou dans la demande de brevet déposée en France le 2 Août 1996 sous le N° 96 09786.

De préférence les huit électrodes 131 à 138 sont reliées deux à deux, par paires diamétralement opposées. De plus l'ouverture angulaire de chaque électrode 131 à 138 est égale à la moitié de l'ouverture angulaire de chaque ailette 112, 114.

L'ensemble 120/110/130 ainsi formé représente électriquement quatre capacités variables en fonction de l'angle de rotation de la pièce mobile 110 et ayant une armature commune. Plus précisément, ces quatre capacités variables sont réalisées entre l'armature commune 120 et l'une des paires de secteurs 131 à 138 de l'armature 130.

On a illustré sur la figure 6, la courbe de variation des quatre capacités ainsi formées en fonction de l'angle de rotation de la pièce mobile 110.

Ces quatre capacités C1, C2, C3 et C4 sont de préférence attaquées par une suite de quatre niveaux continus de tension UC1, UC2, UC3, UC4 tels qu'illustrés sur la figure 7 et décrits par exemple dans le document EP-A-0551066.

Le point commun 120 des quatre capacités entre sur un circuit de détection apte à exploiter le niveau de tension présent sur l'électrode 120 pour déterminer une valeur représentative de l'angle de pivotement de la pièce mobile 110 par rapport à une position de référence.

Le circuit de détection peut comporter par exemple un amplificateur de charges dont l'entrée est reliée à l'électrode commune 120 et qui génère à sa sortie une suite de niveaux dépendants des signaux d'entrée appliqués aux électrodes 131 à 138. La sortie de l'amplificateur de charges peut être reliée par exemple à un convertisseur analogique-numérique.

La figure 8 représente un exemple du signal de sortie d'un tel amplificateur de charges dans le cas où les signaux d'entrée attaquent les capacités par paires : pendant les temps T1 et T2, les capacités C1 et C2 sont reliées et reçoivent un front descendant tandis que les capacités C3 et C4 reliées entre elles reçoivent un front montant, tandis que pendant les temps T3 et T4, les capacités C2 et C3 sont reliées pour recevoir un front descendant et les capacités C1 et C4 sont reliées pour recevoir un front montant.

Ainsi, suite aux évolutions des signaux de commande d'entrée, l'amplificateur de charges délivre successivement quatre niveaux A, B, C et D (visibles sur la figure 8) qui permettent de calculer, d'une part un pseudo-cosinus $KC = B - A$ et un pseudo-sinus $KS = D - C$.

On a illustré sur les figures 9a et 9b, les courbes d'évolution des sommes de capacités C1 + C2, C3 + C4, d'une part, et C2 + C3 et C1 + C4 d'autre part, groupées par paires, en fonction de l'angle de rotation de la pièce mobile 110.

La figure 10 représente la courbe d'évolution des variables KC et KS en fonction de l'angle de rotation.

L'homme de l'art comprendra à l'examen de la figure 10 que le signe des variables KC et KS permet de connaître le secteur dans lequel se situe la pièce mobile 110. Par ailleurs, les signaux KC et KS permettent d'obtenir une variation linéaire de l'angle, par calcul, par exemple :

- pour le premier secteur de 0 à 45° en utilisant la fonction

$$1 - + - [(KS - KC) / (KC + KS)],$$

- pour le second secteur de 45 à 90° en utilisant la fonction

$$3 + [(KS + KC) / (KC - KS)],$$

- pour le troisième secteur de 90 à 135° en utilisant la fonction

$$5 + [(KS - KC) / (KC + KS)],$$

- pour le quatrième secteur de 135 à 180° en utilisant la fonction

$$7 + [(KS + KC) / (KC - KS)].$$

Les courbes correspondantes sont illustrées sur la figure 11 annexée.

En résumé, le calcul de la position angulaire de la pièce mobile 110 et par conséquent de l'organe à détecter, par rapport à une référence fixe peut être obtenu :

- par conversion numérique des quatre niveaux analogiques successifs A, B, C et D lus en sortie de l'amplificateur de charges relié à l'électrode commune 120, tel qu'illustré sur la figure 8,

- calcul d'un pseudo-cosinus $KC = B - A$ et d'un pseudo-sinus $KS = B - C$,
- détermination du secteur suivant le signe de $KC$ et $KS$ et
- calcul de l'angle dans le secteur considéré avec des expressions correspondant aux fonctions indiquées ci-dessus.

Le dispositif principal 200 comporte un élément de commande 210 lié à rotation avec l'organe dont la rotation doit être détectée et qui possède une gorge spiralée 212, un volet 220 comportant un pion 222 engagé dans la gorge spiralée 212 pour être déplacé lors de la rotation dudit élément de commande 210, et un transducteur électrique 230 de type capacitif sensible au déplacement du volet 220 pour délivrer une information représentative de la position du volet et donc représentative de la position angulaire de l'organe.

L'élément de commande 210 comprend plus précisément une bague 211 chassée sur l'organe à détecter et une couronne 213 qui s'étend perpendiculairement à l'axe de rotation O-O de l'organe et dans lequel est formée la gorge spiralée 212. Ainsi la gorge spiralée 212 est centrée sur l'axe de rotation O-O.

Le volet 220 est formé d'un anneau entourant l'arbre de direction avec possibilité de débattement angulaire par rapport à celui-ci, transversalement à l'axe O-O. Ce volet 220 est monté à pivotement sur la coquille 320 autour d'un axe 221 parallèle à l'axe de rotation O-O de l'organe.

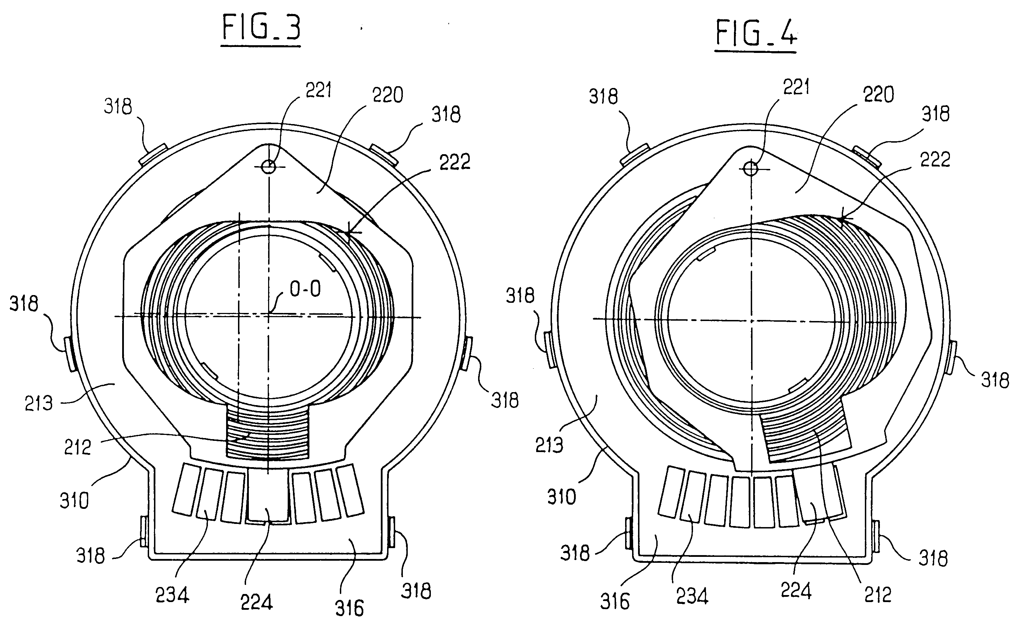

L'homme de l'art comprendra que pour une rotation de l'élément de commande 210 de l'ordre de 1000° autour de l'axe O-O, l'angle de pivotement du volet 220 autour de l'axe 221, est très inférieur. Ce volet 220 est illustré dans une position médiane et dans une position extrême de son déplacement sur les figures 3 et 4 respectivement.

En position diamétralement opposé à cet axe 221, par rapport à l'axe de rotation O-O de l'organe, le volet 220 possède une palette 224.

Cette palette 224 est placée entre deux ensembles d'électrodes 232 et 234 portées respectivement par la coquille 320 et l'entretoise 330.

Ainsi là encore la palette 224 modifie le couplage capacitif entre les électrodes 232 et 234.

Les signaux appliqués aux électrodes 232 et 234, détectés sur celles-ci, ainsi que le traitement de ces signaux, peuvent être conformes aux dispositions décrites dans les documents US-A-3 845 377, EP-A-0 459 118, DE-A-3 711 062, GB-A-2 176 013, DE-A-3 328 421, US-A-4 238 781, FR-A-2 457 003, US-A-3 732 553, EP-A-0 551 066 ou dans la demande de brevet déposée en France le 2 Août 1996 sous le N° 96 09786.

Plus précisément encore l'électrode 232 est de préférence formée d'une électrode unique couvrant un secteur angulaire égal au pivotement du volet 220 pour une rotation de l'élément de commande 210 sur 1000°, tandis que l'ensemble d'électrodes 234 peut être formé par exemple de huit électrodes d'orientation radiale, placées en regard de l'électrode 232 et juxtaposées sur un secteur (couvrant environ 45° par rapport à l'axe O-O) égal à l'ouverture angulaire de l'électrode 232. Ces huit électrodes 234 sont reliées deux à deux avec un intervalle identique, c'est à dire la 1ère avec la 5ème, la 2de avec la 6ème, la 3ème avec la 7ème et la 4ème avec la 8ème.

Ces électrodes 234 reçoivent des signaux de commande et servent ainsi d'émetteurs.

Le signal reçu sur l'électrode 232 en regard est analysé et dépend de la position de la palette 224, donc du volet 220.

La palette 224 destinée à modifier le couplage capacitif entre les électrodes 232 et 234 est de préférence réalisée en matériau électriquement non conducteur, avantageusement en matériau de forte permittivité diélectrique.

Cependant en variante la palette 224 peut être formée en matériau électriquement conducteur, par exemple en métal.

Plus précisément encore les signaux appliqués sur les électrodes 234 peuvent être conformes aux signaux illustrés sur la figure 7, et le traitement appliqué au signal détecté sur l'électrode 232 peut être conforme aux dispositions précédemment décrites pour le dispositif auxiliaire 100.

En effet les signaux illustrés sur les figures 6, 9, 10 et 11 pour le capteur auxiliaire 100 sont transposables au dispositif principal 200, par homothétie; l'échelle de 180° donnée sur ces figures pour le capteur auxiliaire 100 correspondant à 1000° de rotation de l'organe à détecter pour le dispositif principal 200.

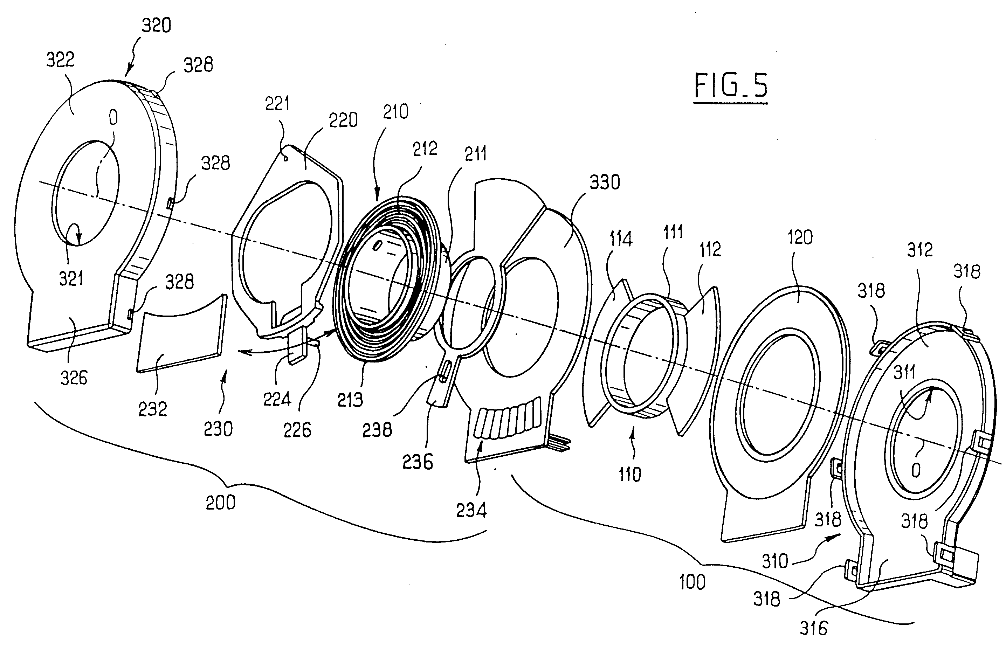

On a illustré sur la figure 5 une variante de réalisation conforme à la présente invention selon laquelle la palette 224 portée par le volet 220 n'est pas directement intercalée entre les électrodes 232 et 234.

Selon cette variante le transducteur 230 comprend en outre un volet secondaire 236 monté à rotation autour de l'axe O-O, intercalé entre les électrodes 232 et 234 et lié à déplacement avec la palette 224. Pour celà, la palette 224 comporte un pion 226 engagé dans une fenêtre radiale 238 du volet 236. Cette disposition permet de disposer d'une amplification du déplacement de l'élément placé entre les électrodes de détection 232 et 234.

La disposition inverse peut être retenue. C'est à dire que la palette 224 peut comporter une fenêtre radiale recevant un pion lié au volet secondaire 236.

Là encore le volet secondaire 236 destiné à modifier le couplage capacitif entre les électrodes 232 et 234 est de préférence réalisé en matériau électriquement non conducteur, avantageusement en matériau de forte permittivité diélectrique.

Cependant en variante le volet 236 peut être formé en matériau électriquement conducteur, par exemple en métal.

L'élément du volet 236 intercalé entre les électrodes 232 et 234, possède avantageusement une amplitude angulaire égale au double de l'amplitude angulaire de chaque électrode 234 considérée individuellement.

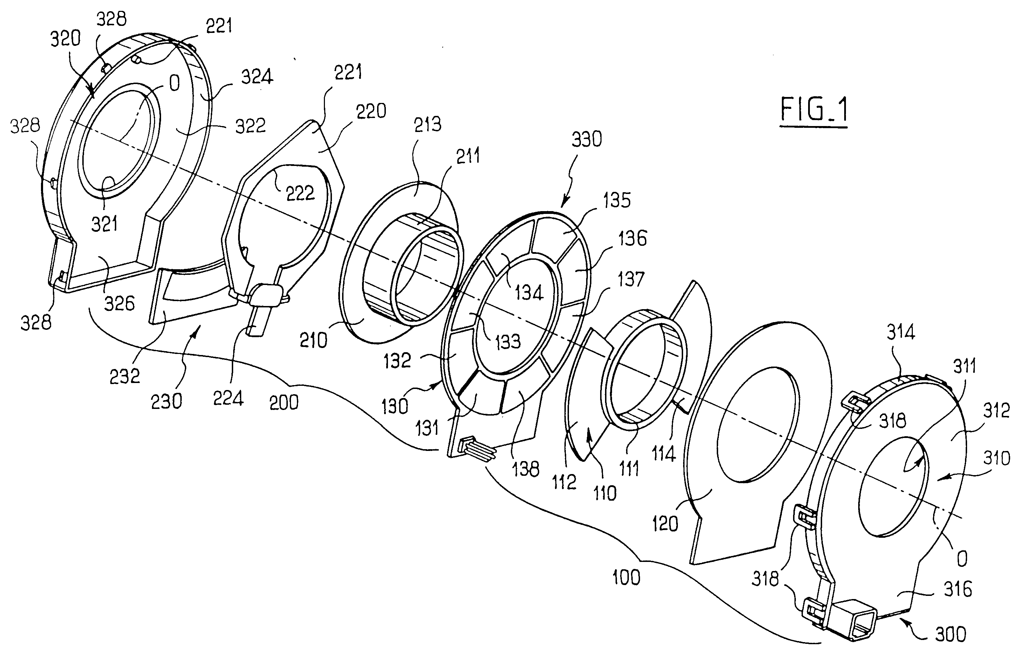

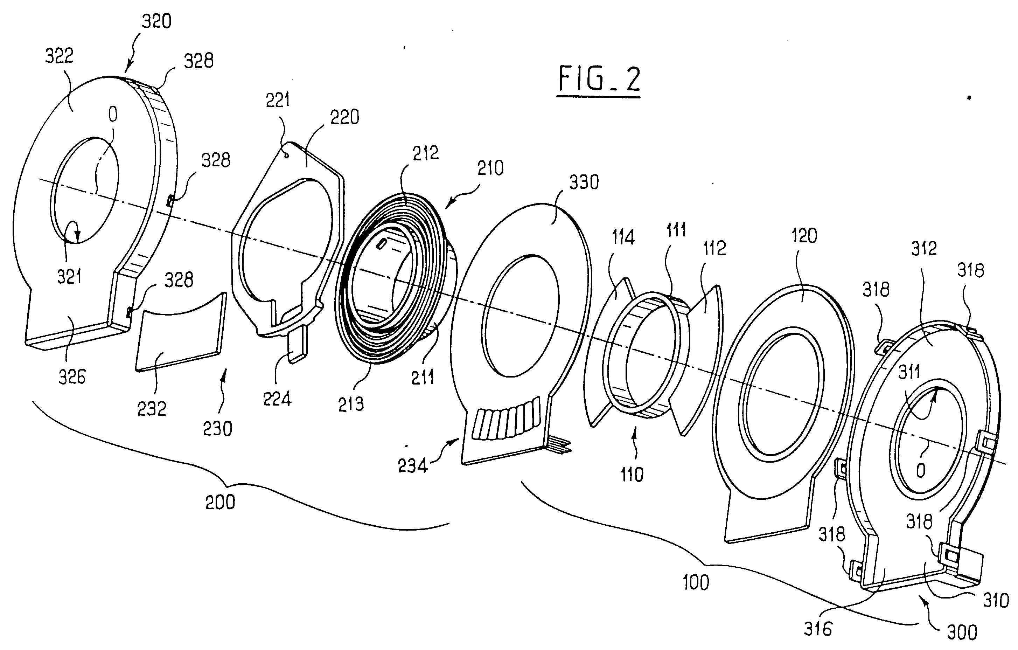

Le mode de fonctionnement du dispositif illustré sur la figure 5 est identique à celui précédemment décrit en regard des figures 1 à 4.

Bien entendu la présente invention n'est pas limitée au modes de réalisation particuliers qui viennent d'être décrits, mais s'étend à toutes variantes conformes à son esprit.

Le capteur d'angle conforme à la présente invention peut faire l'objet de nombreuses variantes d'implantation. Il peut être placé en un lieu quelconque sur la colonne de direction.

Cependant de préférence il est implanté en haut de colonne de direction, entre un un contacteur rotatif et un ensemble de commutation, en étant clipsé et entrainé sur le contacteur rotatif.

L'homme de l'art comprendra que le dispositif principal 200 permet de détecter la position de l'arbre de direction avec une bonne précision sur 1000° et le dispositif auxiliaire 100 permet d'améliorer encore cette précision, puisque le dispositif auxiliaire 100 présente par définition une résolution supérieure pour chaque sous secteur de 180° couvert par le dispositif principal 200.

On notera de plus que de préférence, les signaux de commande appliqués aux électrodes 131 à 138 et 234 sont découpés par un signal d'horloge et les moyens de détection sont conçus pour opérer une détection synchrone avec le signal d'horloge comme indiqué dans la demande de brevet FR 96 09786.

**Revendications**

1. Capteur d'angle pour véhicule automobile, notamment pour arbre de direction, comprenant un élément de commande (210) lié à rotation avec l'organe dont la rotation doit être détectée et qui possède une gorge spiralée (212), un volet (220) comportant un pion (222) engagé dans la gorge spiralée (212) pour être déplacé lors de la rotation dudit élément de commande (210), et un transducteur électrique (230) de type capacitif sensible au déplacement du volet (220) pour délivrer une information représentative de la position dudit organe.

2. Capteur selon la revendication 1, caractérisé par le fait que le volet (220) est monté à pivotement autour d'un axe (221) parallèle à l'axe de rotation O-O de l'organe à détecter.

3. Capteur selon l'une des revendications 1 ou 2, caractérisé par le fait que le volet (220) possède une palette (224) placée entre deux ensembles d'électrodes (232, 234) fixes.

4. Capteur selon l'une des revendications 1 à 3, caractérisé par le fait que le volet (220) comportant un pion (222) engagé dans la gorge spiralée (212), est en outre en prise, par l'intermédiaire d'un pion secondaire (226) engagé dans une fenêtre radiale (238), avec un volet secondaire (236) monté à rotation autour de l'axe (O-O) de l'organe à détecter, ledit volet secondaire (236) étant intercalé entre deux ensembles d'électrodes fixes (232, 234).

5. Capteur selon l'une des revendications 3 ou 4, caractérisé par le fait que l'un des ensembles d'électrodes (234) est formé de plusieurs électrodes - de préférence huit électrodes - d'orientation radiale, juxtaposées sur un secteur couvrant la plage de déplacement du volet (220) par rapport à l'axe O-O, tandis que le second ensemble d'électrodes (232) est formé d'une électrode unique placée en regard du premier ensemble et couvrant la même plage angulaire.

6. Capteur selon la revendication 5, caractérisé par le fait que les électrodes (234) du premier ensemble sont reliées deux à deux et l'élément du volet (220; 236) intercalé entre les deux ensembles d'électrodes (232, 234) possède une ouverture angulaire égale au double de l'amplitude angulaire de chaque électrode individuelle (234) dudit premier ensemble.

7. Capteur selon l'une des revendications 1 à 6, caractérisé par le fait qu'il comprend en outre un second capteur d'angle (100) adapté pour détecter la position de l'organe sur chacun de plusieurs secteurs d'amplitude inférieure à la plage couverte par le premier capteur précité (200).

8. Capteur selon la revendication 7, caractérisé par le fait que le second capteur (100) est formé d'un transducteur de type capacitif.

9. Capteur selon l'une des revendications 7 ou 8, caractérisé par le fait que le second capteur (100) comprend un rotor (110) lié à l'organe à détecter et comportant au moins une ailette radiale (112, 114) associée à un ensemble d'électrodes fixes (131-138, 120) pour modifier le couplage entre celles-ci en fonction de la position angulaire du rotor (110) et donc de l'organe.

10. Capteur selon l'une des revendications 7 à 9, caractérisé par le fait que le second capteur (100) comprend un rotor (110) lié à l'organe à détecter et comportant deux ailettes radiales (112, 114) diamétralement opposées, placées entre deux ensembles d'électrodes fixes, l'une (120) formée d'une électrode unique annulaire perpendiculaire à l'axe de rotation O-O de l'organe et coaxiale à cet axe, l'autre (130) formée d'une pluralité d'électrodes (131-138) - par exemple huit électrodes - équiréparties autour de l'axe de rotation O-O de l'organe.

11. Capteur selon la revendication 10, caractérisé par le fait que les électrodes (131-138) dudit autre ensemble (130) sont reliées deux à deux et l'élément (112, 114) du rotor (110) intercalé entre les deux ensembles d'électrodes (120, 130) possède une ouverture angulaire égale au double de l'amplitude angulaire de chaque électrode individuelle (131-138) dudit autre ensemble (130).

12. Capteur selon l'une des revendications 1 à 11, caractérisé par le fait que l'élément (112, 114, 224, 236) du capteur capacitif intercalé entre deux ensembles d'électrodes fixes (120, 130, 232, 234) est réalisé en matériau électriquement non conducteur, avantageusement en matériau de forte permittivité diélectrique.

13. Capteur selon l'une des revendications 1 à 11, caractérisé par le fait que l'élément (112, 114, 224, 236) du capteur capacitif intercalé entre deux ensembles d'électrodes fixes (120, 130, 232, 234) est réalisé en matériau électriquement conducteur, par exemple en métal.

14. Capteur selon l'une des revendications 7 à 13, caractérisé par le fait qu'il comprend deux capteurs (100, 200) logés dans un boitier (300) commun formé de deux coquilles globalement circulaires, complémentaires et coaxiales (310, 320), respectivement de part et d'autre d'une entretoise médiane (330) transversale à l'axe de rotation O-O de l'organe à détecter.

15. Capteur selon l'une des revendications 7 à 14, caractérisé par le fait que l'un des capteurs (200) est adapté pour détecter un angle de rotation sur une plage de l'ordre de 1000°, tandis que le second capteur (100) est adapté pour détecter un angle de rotation sur une plage de l'ordre de 180°.

16. Capteur selon l'une des revendications 1 à 15, caractérisé par le fait qu'il comprend des moyens aptes à appliquer sur des électrodes fixes respectives (131-138, 234) de chaque capteur (100, 200) une suite de niveaux continus de tension et par le fait qu'il comprend des moyens de traitement aptes à détecter le signal présent sur l'autre ensemble d'électrodes (120, 232) de chaque capteur (100, 200) formant électrode commune et à traiter ce signal

- par conversion numérique des quatre niveaux analogiques successifs A, B, C et D lus sur l'électrode commune (120),

- calcul d'un pseudo-cosinus $KC = B - A$ et d'un pseudo-sinus $KS = B - C$,

- détermination du secteur suivant le signe de KC et KS et

- calcul de l'angle dans le secteur considéré avec des expressions correspondant à des fonctions du type :

. pour un premier secteur : $1 - + - [(KS - KC) / (KC + KS)]$,
. pour un second secteur : $3 + [(KS + KC) / (KC - KS)]$,
. pour un troisième secteur : $5 + [(KS - KC) / (KC + KS)]$,
. pour un quatrième secteur : $7 + [(KS + KC) / (KC - KS)]$.

FIG_1

FIG_2

EP 0 893 672 A1

FIG_4

FIG_3

FIG.5

EP 0 893 672 A1

EP 0 893 672 A1

FIG_6

FIG_7

11

FIG_8

FIG_9a

FIG_9b

FIG_10

FIG_11

**Office européen des brevets**

**RAPPORT DE RECHERCHE EUROPEENNE**

Numéro de la demande

EP 98 40 1876

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y | EP 0 386 439 A (ROBERT BOSCH GMBH) 12 septembre 1990 * colonne 2, ligne 15 - ligne 28 * * colonne 2, ligne 28 - ligne 31 * * colonne 2, ligne 31 - colonne 3, ligne 27 * | 1,7-12, 15 | G01D5/24 G01B7/30 B62D15/02 |
| D,Y | EP 0 551 066 A (BRASSEUR,GEORG) 14 juillet 1993 * figure 2 * | 1,7-12, 15 | |
| A | PATENT ABSTRACTS OF JAPAN vol. 5, no. 32 (P-050), 27 février 1981 & JP 55 156803 A  (NISSAN MOTOR CO LTD), 6 décembre 1980 * abrégé * | 1 | |
| A | DE 41 23 781 A (TELDIX GMBH) 21 janvier 1993 * revendication 1 * | 1 | |

DOMAINES TECHNIQUES RECHERCHES (Int.Cl.6)

G01D
G01B
B62D

Le présent rapport a été établi pour toutes les revendications

| Lieu de la recherche | Date d'achèvement de la recherche | Examinateur |
|---|---|---|
| LA HAYE | 15 octobre 1998 | Lut, K |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant